# EUROPÄISCHE PATENTSCHRIFT

(11) **EP 2 801 246 B1**
(45) Veröffentlichungstag und Bekanntmachung des Hinweises auf die Patenterteilung: **23.11.2016**
(21) Anmeldenummer: 14166224.7
(22) Anmeldetag: 28.04.2014
(51) Int. Cl.: A01B 59/06, A01B 59/00

(54) **Landwirtschaftliches Anbau- oder Anhängegerät**
Agricultural attachment or trailer device
Outil agricole traîné ou porté

(30) Priorität: 06.05.2013 DE 102013208279
(43) Veröffentlichungstag der Anmeldung: 12.11.2014
(73) Patentinhaber: CLAAS Saulgau GmbH, 88348 Bad Saulgau (DE)
(72) Erfinder: Ober, Martin, 78736 Epfendorf-Trichtingen (DE)

(56) Entgegenhaltungen:
- DE-A1- 1 957 228
- US-A- 2 673 507

## Beschreibung

Die Erfindung betrifft ein landwirtschaftliches Anbau- oder Anhängegerät mit Koppelmitteln zum Verbinden mit einem Lenker einer Dreipunktanbauvorrichtung eines Traktors gemäß den Merkmalen des Anspruchs 1.

Es ist allgemein bekannt landwirtschaftliche Anbau- oder Anhängegeräte, wie Mähwerke, Heuwerbungsmaschinen, Pflüge oder sonstige Geräte, an einer Dreipunktaufhängung von landwirtschaftlichen Schleppern oder Traktoren aufzunehmen. Dazu sind die Anbau- oder Anhängegeräte mit Lenkerkugeln ausgestattet, die an den Unterlenkern der Dreipunktaufhängung aufgenommen werden. Zum Ankoppeln eines Anbau- oder Anhängegerätes wird der Schlepper mit den abgesenkten Unterlenkern so an das Gerät herangefahren, dass die Fanghaken der Unterlenker direkt unterhalb der Lenkerkugeln positioniert sind. Dann werden die Unterlenker angehoben und die Lenkerkugeln werden in den Fanghaken aufgenommen und durch Klinken gesichert. Abschließend kann das Anbau- oder Anhängegerät falls erforderlich noch mit einem Oberlenker an den Schlepper angekoppelt werden.

Je nach Bedarf kann das Anbau- oder Anhängegerät zusätzlich noch - wie allgemein bekannt - mit einer Zapfwelle, hydraulischen und/oder elektrischen Anschlüssen des Schleppers bzw. Traktors verbunden werden.

Um das Ankoppeln der Unterlenker zu vereinfachen ist es allgemein bekannt, an den Lenkerkugeln der Anbau- oder Anhängegeräte einseitig Einführhilfen, wie Fangteller oder Fangschalen, vorzusehen. In diesem Fall müssen die Unterlenker zum Ankoppeln nicht so exakt unter den Lenkerkugeln positioniert werden, da sie beim Anheben durch die Einführhilfen zu den Lenkerkugeln geführt werden.

Weiterhin ist es auch allgemein bekannt, die Lenkerkugeln auf Bolzen anzuordnen, welche zur Anpassung an verschieden breite Unterlenker einer Dreipunktaufhängung, an verschiedenen Positionen des Anbau- oder Anhängegeräts montiert werden können. Mit diesen umsteckbaren Verstellbolzen kann auch die seitliche Relativlage des Anbau- oder Anhängegeräts zur Längsmittelebene des Schleppers verändert werden. Bei solchen einseitig am Anbau- oder Anhängegerät befestigten Verstellbolzen ist jedoch lediglich auf einer - nämlich der freien - Seite eine Einführhilfe vorgesehen. Wird der Traktor in diesem Fall zum Ankoppeln unpräzise an das Gerät herangefahren und ein Unterlenker ist in die Richtung verschoben, wo keine Einführhilfe vorhanden ist, dann muss der Traktor bzw. Schlepper durch Rückwärts- und Vorwärtsfahren nochmals neu positioniert werden.

US 2 673 507 A bezieht sich auf eine Anbauvorrichtung für ein Arbeitsgerät zur Ankopplung an einen Traktor mit Führungsmitteln, welche die miteinander zu koppelnden Verbindungselemente aufeinander zuführen.

Aufgabe der Erfindung ist es, ein Anbau- oder Anhängegerät mit einseitig gelagerten Unterlenkerbolzen zu schaffen, mit welchem das Ankoppeln an eine Dreipunktaufhängung eines Schleppers oder Traktors leichter möglich ist.

Diese Aufgabe wird mit den Merkmalen des Anspruchs 1 gelöst.

Bei einem erfindungsgemäß ausgestatteten Anbau- oder Anhängegerät wird an der Seite, an der die Lenkerkugeln über einen Bolzen mit dem Gerät verbunden sind, ein weiteres Leitelement mit einer Leitfläche für einen Lenker einer Dreipunktanbauvorrichtung vorgesehen. Dadurch wird ein Lenker- insbesondere ein Unterlenker - beim Ankoppeln des Anbau- oder Anhängegeräts von beiden Seiten geführt und der Schlepper bzw. Traktor muss nicht so genau an das Gerät herangefahren werden. Das erleichtert den Ankoppelvorgang besonders vorteilhaft, da ein zeitraubendes Rangieren durch erneutes Vor- und Zurücksetzen des Schleppers bzw. Traktors durch die erfindungsgemäßen Leitelemente erspart bleibt. Besonders vorteilhaft wirkt ein erfindungsgemäßes weiteres Leitelement bei Lenkerkugeln, die an einseitig befestigten Unterlenker-Verstellbolzen angeordnet sind.

Erfindungsgemäß werden die zusätzlichen Leitelemente direkt an einer Halterung des Anbau- oder Anhängegeräts befestigt, an welcher die Lenkerkugeln mittels Bolzen aufgenommen werden. Dazu werden die Leitelemente vorzugsweise in Form von Fangschalen ausgeführt, die an die Halterung angeschweißt werden. Ebenso ist auch eine Ausführung mit geschraubten Leitelementen denkbar, die von einer zur anderen Seite der Halterung getauscht werden können.

Besonders vorteilhaft werden an jeder Halterung bzw. an jeder Position einer Halterung, an welcher eine Lenkerkugel aufgenommen werden kann, entsprechende Leitelemente vorgesehen. Dadurch können die Lenkerkugeln zur Anpassung an verschiedene Kategorien von Dreipunktanbauvorrichtungen oder zum Verändern der seitlichen Position umgesteckt werden, ohne dass die Leitelemente separat umgesteckt werden müssen.

Besonders vorteilhaft wirkt das erfindungsgemäße zusätzliche Leitelement zur Aufnahme einer Lenkerkugel in die vorgesehene - auch als Fanghaken bezeichnete - Aufnahmeöffnung eines Unterlenkers einer Dreipunktanbauvorrichtung eines Schleppers oder Traktors.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: ein erfindungsgemäßes Anbaugerät aufgenommen an einer hinteren Dreipunktanbauvorrichtung eines Traktors,
- Fig. 2a, b: stellen ein Rahmenteil eines erfindungsgemäßen Anbaugeräts mit Lenkerkugeln als Koppelmittel in unterschiedlichen Positionen dar,
- Fig. 3: zeigt den Ausschnitt A aus Fig. 2b mit einem erfindungsgemäßen Koppelmittel, und
- Fig. 4, 5: veranschaulichen einen Ankoppelvorgang mit erfindungsgemäßen Koppelmitteln.

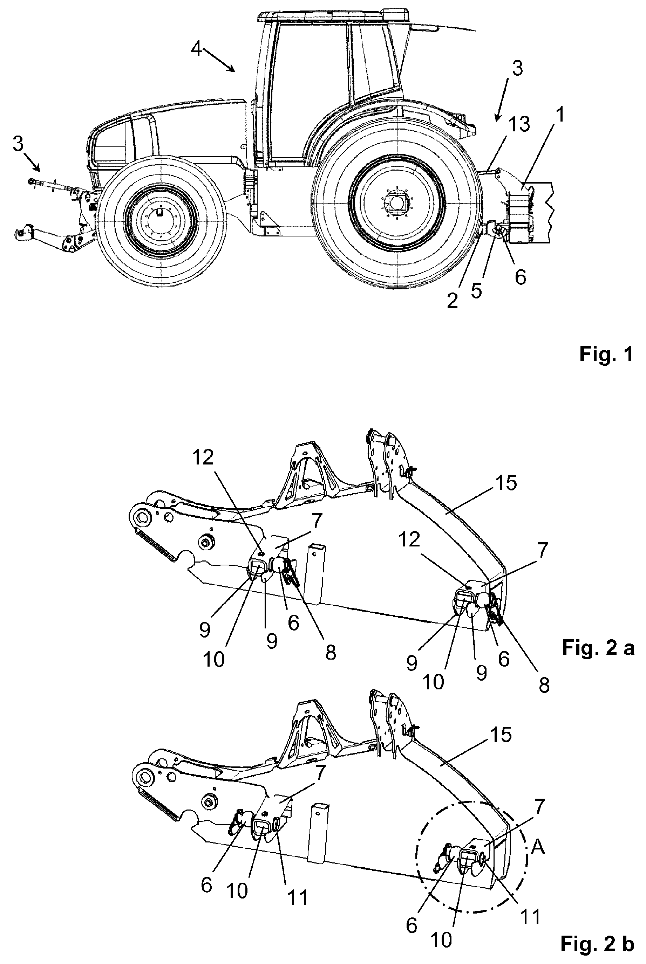

In Figur 1 ist ein erfindungsgemäßes Anbaugerät 1 in abgebrochener Form dargestellt, wie es an einer hinteren Dreipunktanbauvorrichtung 3 eines Traktors 4 aufgenommen ist. Das Anbaugerät 1 kann beispielsweise ein Mähwerk sein, welches in einer Arbeitsposition seitlich neben der Spur des Traktors auskragt und zum Abmähen von Gras oder anderem Erntgut über die Grasnarbe geführt wird. Ebenso kann das Anbaugerät 1 auch ein Pflug oder ein anderes Gerät sein, wie auch beispielsweise eine Heuwerbungsmaschine, die an der Dreipunktanbauvorrichtung 3 des Traktors 4 oder Schleppers aufgenommen ist und sich zusätzlich mit einem eigenen Fahrwerk am Boden abstützt und damit als Anhängegerät ausgeführt ist. Selbstverständlich kann ein erfindungsgemäß ausgestattetes Anbaugerät 1 auch an einem Fronthubwerk bzw. an einer vorderen Dreipunktanbauvorrichtung 3 des Traktors 4 aufgenommen werden.

Das Anbaugerät 1 ist mit Lenkerkugeln 6 in Fanghaken 5 der beiden Unterlenker 2 der Dreipunktanhängung 3 aufgenommen, wobei der im Vordergrund dargestellte Unterlenker 2 den dahinter befindlichen verdeckt. Zusätzlich zu den Unterlenkern kann ein erfindungsgemäßes Anbau- oder Anhängegerät 1 auch noch über einen Oberlenker 13 mit dem Traktor verbunden werden.

In den Figuren 2a, b ist ein Rahmenteil 15 des erfindungsgemäßen Anbaugeräts 1 mit den Koppelmitteln bzw. Lenkerkugeln 6 in unterschiedlichen Positionen dargestellt. Das Anbaugerät 1 ist in dieser Darstellung vom Traktor 4 abgenommen. Das Rahmenteil 15 ist im vorliegenden Beispiel die Verbindungsstruktur zum Traktor 4 und weist Halterungen 7 auf, die mit Bohrungen 11 (Fig. 2b) versehen sind. In die Bohrungen können Bolzen 10 aufgenommen werden, welche die Lenkerkugeln 6 tragen. Die Bolzen 10 werden vorzugsweise durch Schrauben 12 gegen Verdrehen und axiale Verschiebung gesichert.

In Figur 2a befinden sich die Lenkerkugeln 6 rechts neben den Halterungen 7, weil die Bolzen 10 von der rechten Seite in die Bohrungen 11 der Halterungen 7 eingesteckt wurden. In Figur 2b dagegen wurden die Bolzen 10 von der linken Seite in die Bohrungen eingeführt und die Lenkerkugeln 6 sind links neben den Halterungen 7 angeordnet. Durch diese unterschiedlichen Steckoptionen ist es möglich, ein Anbaugerät 1 gegenüber der Längsmittelebene des Traktors 4 zu verlagern. Dadurch kann ein Anbaugerät 1, wie beispielsweise ein Mähwerk, das an der hinteren Dreipunktanbauvorrichtung aufgenommen wird, auf ein weiteres Anbaugerät ausgerichtet werden, welches an der vorderen Dreipunktanbauvorrichtung aufgenommen wird. So kann in vorteilhafter Weise beispielsweise die Gesamtmähbreite optimiert werden, die von einem vorderem und hinterem Mähwerk zusammenwirkend ereicht werden kann.

Darüber hinaus kann durch die verschiedenen Steckmöglichkeiten der Abstand zwischen den Lenkerkugeln 6 verändert werden und auf verschieden breite Kategorien von Dreipunktanbauvorrichtungen angepasst werden. Zur Anpassung an weiter voneinander beabstandete Unterlenker können beide Bolzen 10 von außen in die Halterungen 7 eingesteckt werden, so dass die Lenkerkugeln 6 einen weiteren Abstand zueinander aufweisen.

Erfindungsgemäß wird zusätzlich zu der am freien Ende der Lenkerkugel 6 angeordneten Fangschale 8 eine weitere Fangschale 9 vorgesehen, welche der ersten Fangschale 8 gegenübersteht und durch welche der Lenker bzw. der Fanghaken von der dem freien Ende gegenüberliegenden Halterungsseite aus zur Lenkerkugel 6 hin geführt wird, wenn er beim Heranfahren des Traktors an das Anbaugerät nicht exakt unter der Lenkerkugel positioniert ist.

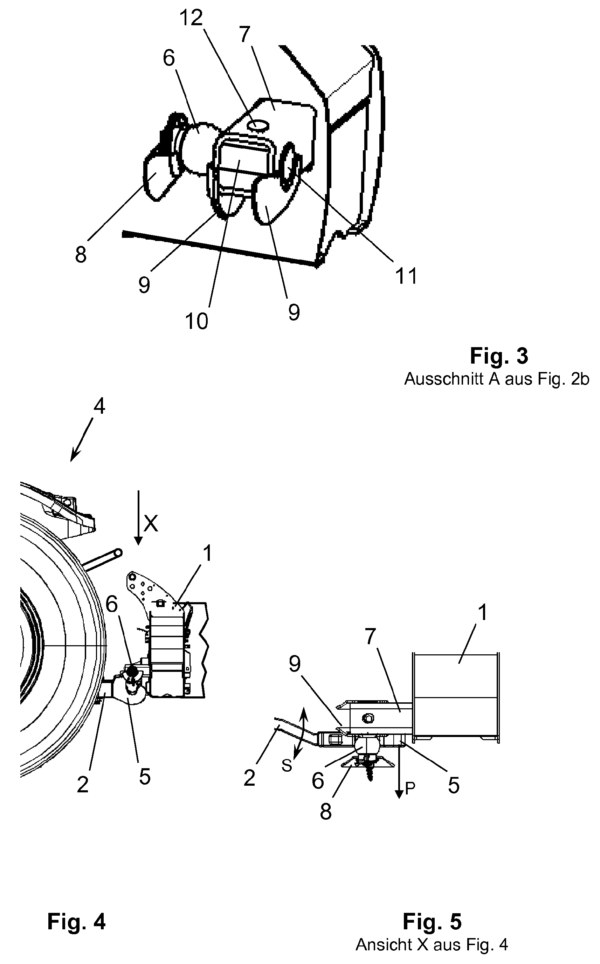

Der Ausschnitt A aus der Figur 2b ist in Figur 3 vergrößert dargestellt, wobei ersichtlich wird, dass die weitere Fangschale 9 als Leitmittel für den Unterlenker bzw. den Fanghaken vorzugsweise an der Halterung 7 angeordnet ist. Vorzugsweise wird das weitere Leitmittel 9 an der Halterung 7 durch eine Schweißverbindung fixiert. In Figur 3 ist eine weitere bevorzugte Ausführung der Erfindung dargestellt, nach der an beiden Seiten der Halterung 7 bzw. der Bohrung 11 jeweils eine weitere Fangschale 9 bzw. ein Führungs- oder Leitmittel vorgesehen ist.

In Figur 3 ist ersichtlich wie die schrägen Flächen der Fangschalen 8, 9 von einer breiten Öffnungsweite schmäler werdend einen seitlich beweglichen Lenker einer Dreipunktanbauvorrichtung zur Lenkerkugel 6 hinleiten, sofern der Lenker nicht exakt unter der Lenkerkugel 6 positioniert ist.

Statt der Fixierung eines weiteren Leitmittels durch Schweißverbindungen, ist es auch möglich, Schraubverbindungen vorzusehen. Bei einer Ausführungsform mit Schraubverbindung ist es möglich, die weitere Fangschale bzw. das weitere Leitelement von einer Seite auf die andere umzubauen.

In Figur 4 ist ein Ankoppelvorgang eines, mit erfindungsgemäßen Koppelmitteln ausgestatteten, Anbaugeräts 1 - von der Seite gesehen - dargestellt. Der Traktor 4 ist bereits mit den Unterlenkern 2 rückwärts an das Anbaugerät herangefahren und der Fanghaken 5 des Unterlenkers 2 ist unterhalb der Lenkerkugel 6 positioniert.

Aus der in Figur 5 dargestellten Ansicht X aus Figur 4 als Draufsicht ist ersichtlich, dass der Fanghaken 5 nicht exakt unter der Lenkerkugel 6 positioniert ist, sondern sich seitlich versetzt unterhalb der Halterung 7 befindet. In dieser Lage wird der Fanghaken 5 von der weiteren Fangschale 9 erfasst und beim Anheben des Unterlenkers 2 in Richtung des Pfeils P zur Lenkerkugel 6 hin geführt, um diese aufzunehmen. Der Lenker 2 ist in einem begrenzten Bereich in Richtung des Doppelpfeils S beweglich, so dass er der Leitfläche folgen kann. Das trifft selbstverständlich auch auf den im Bildhintergrund befindlichen Unterlenker zu, der in dieser Ansicht nicht sichtbar ist.

Ein wesentlicher Kern der Erfindung ist es, einen zu koppelnden Lenker eines Traktors oder Schleppers, der seitlich auslenkbar ist, von beiden Seiten zu einer einseitig gelagerten Lenkerkugel eines Anbau- oder Anhängegerätes zu führen. Dazu wird an der Seite an der die Lenkerkugel am Anbau- bzw. Anhängegerät aufgehängt ist, mindestens ein weiteres Leitelement vorgesehen, dessen Leit- bzw. Führungsflächen so verlaufen, dass sie einen sich annähernden seitlich versetzten Lenker trichterförmig zur Lenkerkugel lenken.

### Bezugszeichenliste

- 1: Anbau- oder Anhängegerät
- 2: Unterlenker
- 3: Dreipunktanbauvorrichtung
- 4: Traktor, Schlepper
- 5: Ausnehmung, Fanghaken
- 6: Koppelmittel, Lenkerkugel
- 7: Halterung
- 8: Leitelement, Fangschale
- 9: Leitelement, Fangschale
- 10: Bolzen
- 11: Bohrung
- 12: Schraube
- 13: Oberlenker

- 15: Rahmenteil

## Patentansprüche

1. Landwirtschaftliches Anbau- oder Anhängegerät (1) mit Koppelmitteln (6) zum Verbinden mit einem Lenker (2) einer Dreipunktanbauvorrichtung (3) eines Traktors (4), wobei der Lenker (2) eine hakenförmige zu einer Seite offene Ausnehmung (5) aufweist, in welche die Koppelmittel (6) aufnehmbar sind und die Koppelmittel (6) einseitig an einer Halterung (7) des Anbau- oder Anhängegerätes (1) befestigt sind sowie an ihrem freien Ende mit einem den Lenker (2) zu den Koppelmitteln (6) hinführenden Leitelement (8) versehen sind, wobei mindestens ein weiteres Leitelement (9) vorgesehen ist, welches dem ersten Leitelement (8) gegenübersteht und durch welches der Lenker (2) von der dem freien Ende gegenüberliegenden Halterungsseite aus zu den Koppelmitteln (6) hinführbar ist, **dadurch gekennzeichnet, dass** das oder jedes weitere Leitelement (9) direkt an der jeweiligen Halterung (7) befestigt ist - insbesondere an der jeweiligen Halterung (7) angeschweißt ist.

2. Landwirtschaftliches Gerät nach Anspruch 1, **dadurch gekennzeichnet, dass** die Koppelmittel des Anbau- oder Anhängegeräts wenigstens zwei Lenkerkugeln (6) umfassen, die jeweils an einem Unterlenker (2) der Dreipunktanbauvorrichtung (3) des Traktors (4) aufnehmbar sind, und wobei die Lenkerkugeln (6) jeweils auf einem Bolzen (10) angeordnet sind, der jeweils in einer Bohrung (11) von zwei mit Abstand zueinander angeordneten Halterungen (7) lösbar aufnehmbar ist und Mittel (12) vorgesehen sind, welche eine Verdrehung und/oder eine axiale Verschiebung der Bolzen (10) verhindern, wobei die Bolzen (10) in unterschiedlichen Richtungen in den Bohrungen aufnehmbar sind, so dass die Lenkerkugeln (6) unterschiedliche Relativpositionen bezüglich den Halterungen (7) einnehmen können und an beiden Aufnahmepositionen an den Halterungen weitere Leitelemente (9) angeordnet sind.

3. Landwirtschaftliches Gerät nach einem der vorangehenden Ansprüche, **dadurch gekennzeichnet, dass** die Leitelemente als Fangschale, Fangteller oder als schräge auf die Lenkerkugel (6) hinführende Leitflächen ausgeführt sind.

## Claims

1. An agricultural attachment or trailer device (1) having coupling means (6) for connection to a link (2) of a three-point attachment device (3) of a tractor (4), wherein the link (2) has a hook-shaped recess (5) which is open towards one side and in which the coupling means (6) can be received and the coupling means (6) are fixed at one side to a holder (7) of the attachment or trailer device (1) and are provided at their free end with a guide element (8) which guides the link (2) to the coupling means (6), wherein there is provided at least one further guide element (9) which is opposite to the first guide element (8) and by which the link (2) can be guided from the side of the holder that is opposite to the free end to the coupling means (6), **characterised in that** the or each further guide element (9) is fixed directly to the respective holder (7), in particular welded to the respective holder (7).

2. An agricultural device according to claim 1 **characterised in that** the coupling means of the attachment or trailer device include at least two link balls (6) which can be respectively received at a lower link (2) of the three-point attachment device (3) of the tractor (4) and wherein the link balls (6) are respectively arranged on a pin (10) which can be releasably received in a respective bore (11) of two mutually spaced holders (7) and there are provided means (12) which prevent rotation and/or axial displacement of the pins (10), wherein the pins (10) can be received in different directions in the bores so that the link balls (6) can adopt different relative positions with respect to the holders (7) and further guide elements (9) are arranged at both receiving positions on the holders.

3. An agricultural device according to one of the preceding claims **characterised in that** the guide elements are in the form of a catch bowl, catch plate or in the form of inclined guide surfaces leading to the link balls (6).

## Revendications

1. Outil agricole porté ou attelé (1) présentant des moyens d'accouplement (6) pour la liaison avec un bras (2) d'un dispositif d'attelage trois points (3) d'un tracteur (4), le bras (2) étant pourvu d'un évidement (5) en forme de crochet ouvert d'un côté, dans lequel les moyens d'accouplement (6) peuvent être logés, et les moyens d'accouplement (6) étant fixés d'un côté à un support (7) de l'outil porté ou attelé (1) et étant pourvus à leur extrémité libre d'un élément de guidage (8) menant le bras (2) vers les moyens d'accouplement (6), au moins un autre élément de guidage (9) étant prévu, lequel fait face au premier élément de guidage (8) et par lequel le bras (2) peut être mené vers les moyens d'accouplement (6) depuis le côté du support opposé à l'extrémité libre, **caractérisé en ce que** le ou tout autre élément de guidage (9) est fixé directement au support (7) respectif, en particulier est soudé au support (7) respectif.

2. Outil agricole selon la revendication 1, **caractérisé en ce que** les moyens d'accouplement de l'outil porté ou attelé comprennent au moins deux boules de bras (6) qui peuvent être reçues chacune sur un bras inférieur (2) du dispositif d'attelage trois points (3) du tracteur (4), les boules de bras (6) étant disposées chacune sur un axe (10) qui peut être reçu chaque fois de manière amovible dans un perçage (11) de deux supports (7) disposés à distance l'un de l'autre, et des moyens (12) étant prévus, lesquels empêchent une rotation et/ou un déplacement axial des axes (10), les axes (10) pouvant être reçus dans différentes directions dans les perçages, de sorte que les boules de bras (6) peuvent prendre différentes positions relatives par rapport aux supports (7), et d'autres éléments de guidage (9) étant disposés sur les supports aux deux positions de réception.

3. Outil agricole selon l'une des revendications précédentes, **caractérisé en ce que** les éléments de guidage sont réalisés sous la forme d'une cuvette de réception, d'un plateau de réception ou de surfaces de guidage inclinées menant vers la boule de bras (6).
